**Europäisches Patentamt**

**European Patent Office**

**Office européen des brevets**

(19)

(11) Veröffentlichungsnummer : **0 146 078**
**B1**

(12) **EUROPÄISCHE PATENTSCHRIFT**

(45) Veröffentlichungstag der Patentschrift :
**15.03.89**

(51) Int. Cl.⁴ : **C 04 B 24/30**

(21) Anmeldenummer : **84114796.0**

(22) Anmeldetag : **05.12.84**

---

(54) **Dispergiermittel für salzhaltige Systeme.**

---

(30) Priorität : **07.12.83 DE 3344291**

(43) Veröffentlichungstag der Anmeldung :
**26.06.85 Patentblatt 85/26**

(45) Bekanntmachung des Hinweises auf die Patenterteilung : **15.03.89 Patentblatt 89/11**

(84) Benannte Vertragsstaaten :
**AT BE CH DE FR GB IT LI NL SE**

(56) Entgegenhaltungen :
**EP—A— 0 078 938**
**EP—A— 0 163 459**
**US—A— 2 828 820**
**Die Akte enthält technische Angaben, die nach dem Eingang der Anmeldung eingereicht wurden und die nicht in dieser Patentschrift enthalten sind.**

(73) Patentinhaber : **SKW Trostberg Aktiengesellschaft**
**Dr.-Albert-Frank-Strasse 32 Postfach 1150/1160**
**D-8223 Trostberg (DE)**

(72) Erfinder : **Plank, Johann, Dr.**
**Peter-Müllritter-Strasse 8**
**D-8223 Trostberg (DE)**
Erfinder : **Aignesberger, Alois, Dr.**
**Pienzenauerstrasse 16**
**D-8223 Trostberg (DE)**

(74) Vertreter : **Huber, Bernhard, Dipl.-Chem. et al**
**Patentanwälte H. Weickmann, Dr. K. Fincke F.A. Weickmann, B. Huber Dr. H. Liska, Dr. J. Prechtel Möhlstrasse 22 Postfach 860 820**
**D-8000 München 86 (DE)**

**Beschreibung**

Die Erfindung betrifft die Verwendung von Säuregruppen enthaltenden Kondensationsprodukten von Aldehyden und Ketonen mit spezieller Eignung als Dispergiermittel für stark salzhaltige Zementationssysteme.

Dispergiermittel für anorganische Bindemittel, wie z. B. Zement oder Gips, sind seit langem bekannt. Sie werden entweder zur Viskositätserniedrigung (Verflüssigung) einer Bindemittelsuspension bei gegebenem Wasser-Bindemittel-Faktor oder zur Reduzierung des Wasseranspruchs bei gleichbleibender Konsistenz eingesetzt.

M. R. Rixom beschreibt in seinem Buch « Chemical Admixtures for Concrete » (London 1978) insgesamt fünf chemisch verschiedene Gruppen von Dispergiermitteln, welche in der modernen Betontechnologie bekannt sind : Melamin- und Naphthalin-Formaldehyd-Sulfonsäureharze, Ligninsulfonate, Hydroxycarbonsäuresalze und hydroxylierte Polymere auf Polysaccharid-Basis. Darüberhinaus offenbart DE-A-3 144 673 eine weitere neuartige Klasse von Dispergiermitteln, welche aus Säuregruppen enthaltenden Keton-Aldehyd-Kondensationsprodukten besteht.

Die Wirkung dieser bekannten Dispergiermittel ist jedoch verschieden. So bezeichnet Rixom die Melamin- und Naphthalin-Formaldehyd-Sulfonsäureharze allgemein als « Superverflüssiger », da sie die bei weitem größte Dispergierwirkung besitzen und keine unerwünschten Nebeneffekte bedingen. Auch die in der DE-A-3 144 673 beschriebenen Keton-Aldehyd-Harze werden aufgrund ihrer ausgezeichneten Dispergiereigenschaften den « Superverflüssigern » zugerechnet. Ligninsulfonate sind weniger wirksame Verflüssiger und besitzen zudem den Nachteil, daß sie selbst in gereinigter, zuckerfreier Form die Zementhydratation deutlich verzögern. Hydroxycarbonsäuresalze und hydroxylierte Polysaccharide weisen eine noch stärker verzögernde Wirkung als die Ligninsulfonate auf und können nur in sehr geringen Dosierungen eingesetzt werden, wobei sie begrenzte Dispergiereigenschaften enthalten. Aus der EP-0 078 938 sind Säuregruppen enthaltende Kondensationsprodukte von Aldehyden und Ketonen bekannt, die ebenfalls als Dispergiermittel und Verflüssigungsmittel verwendet werden können.

Die Verwendung der Dispergiermittel erfolgt in der Regel in Bindemittelsuspensionen, in denen nur geringe Mengen an gelösten anorganischen und organischen Salzen, wie z. B. Natrium- oder Calciumchlorid, enthalten sind. In diesem Falle zeigen die Dispergiermittel die geschilderte gute Wirkung.

In der Beton- und Zementationstechnik ist es jedoch teilweise nötig, Bindemittelsuspensionen mit Gehalten an löslichen anorganischen und organischen Salzen von bis zu 30 Gew.-%, bezogen auf den Zementanteil, herzustellen. Beispiele hierfür sind das Betonieren in kalten Klimazonen, wobei insbesondere Calciumchlorid und Calciumnitrat in Konzentrationen von 2 bis 5 Gew.-% als Erstarrungsbeschleuniger verwendet werden, oder das Betonieren mit Meerwasser in Fällen, in denen Frischwasser als Anmachwasser nicht verfügbar ist. Auch beim Betonieren im Bergbau ist es häufig notwendig, als Anmachwasser eine gesättigte Kochsalzlösung zu verwenden, um gute Haftfestigkeit des Betons mit den salzhaltigen Formationen zu erzielen. Weitere Beispiele für die Verwendung von Bindemittelsuspensionen mit Gehalt an löslichen anorganischen und organischen Salzen finden sich in der bei Öl-, Gas- und Wasserbohrungen durchgeführten Tiefbohrzementation. Hier ist zur Vermeidung von Quellvorgängen tonhaltiger Lagerstätten sowie zum Erreichen einer festen Bindung des Zementschildes mit der Formation Salzzugabe bei der Herstellung der Zementschlämme notwendig. Darüberhinaus steht z. B. auf Offshore-Bohrstellen nur salzhaltiges Meerwasser als Anmachwasser zur Verfügung.

Dem Fachmann ist aber bekannt, daß Melamin- und Naphthalin-Formaldehyd-Sulfonsäureharze sowie Ligninsulfonate bei höheren Gehalten der erwähnten anorganischen und organischen Salze in der Bindemittelsuspension ihre gute Dispergierwirkung rasch verlieren (vgl. z. B. D.K. Smith « Cementing » (New York 1976, S. 25)). Die Hydroxycarbonsäuren und hydroxylierten Polysaccharide sind bei höherer Dosierung z. T. auch in Gegenwart von Salzen wirksame Dispergiermittel. In der Praxis sind Zusatzmittel aus diesen beiden Stoffgruppen jedoch nicht brauchbar, da sie bei den für eine gute Dispergierung anzuwendenden hohen Dosierungen die Zementhydratation äußerst stark verzögern und damit für einen wirtschaftlichen Baufortschritt aufgrund der geringen Festigkeitsentwicklung ungeeignet sind.

Aufgabe der Erfindung ist es daher, ein Dispergiermittel zur Verwendung bei der Herstellung von Bindemittelsuspensionen mit höheren Gehalten an löslichen anorganischen und organischen Salzen aufzufinden, welches in wirtschaftlich sinnvollen Dosierungen einzusetzen ist und gleichzeitig keine unerwünschten Nebeneffekte, z. B. hinsichtlich der Festigkeitsentwicklung des Bindemittels, aufweist.

Gelöst wird diese Aufgabe durch die Verwendung eines Kondensationsproduktes aus Keton, Aldehyd und Säuregruppen einführender Verbindung im Molverhältnis von 1 : 1 bis 18 : 0,25 bis 3,0, das durch Umsetzung dieser Komponenten bei einer Temperatur zwischen 60 und 85 °C hergestellt worden ist, für salzhaltige Zementationssysteme, die mehr als 2 % von Salzen ein- oder mehrwertiger Kationen enthalten.

Die Eigenschaften des erfindungsgemäß verwendeten Dispergiermittels sind insofern sehr überraschend, als unter der Vielfalt der heute auf dem Markt angebotenen und nach verschiedenen Syntheseprinzipien hergestellten Naphthalin- und Melamin-Formaldehyd-Sulfonsäureharze kein einziges mit befriedigenden Dispergiereigenschaften in salzhaltigen Systemen bekannt ist und auch die anderen Gruppen von Dispergiermitteln (Ligninsulfonate, Hydroxycarbonsäuren und hydroxylierte Polymere auf Polysaccharidbasis) hierfür ungeeignet sind.

Entscheidende Bedeutung für die Erzielung einer dauerhaften Dispergierwirksamkeit im stark salzhaltigen System hat die Einhaltung einer Temperatur von 60 bis 85 °C bei der Herstellung des Kondensates aus den drei Komponenten, Keton, Aldehyd und Säuregruppen einführende Verbindung. Wird im Laufe der Kondensation diese Temperatur überschritten, so geht die Wirksamkeit bei den genannten stark salzhaltigen Systemen rasch wieder verloren. Desgleichen erhält man kein brauchbares Produkt, wenn die Umsetzung bei einer Temperatur unter 60 °C erfolgt ist.

Als Ketone können die erfindungsgemäß verwendeten Kondensationsprodukte symmetrische oder unsymmetrische Ketone mit acyclischen Kohlenwasserstoffresten enthalten, welche vorzugsweise 1 bis 3 Kohlenstoffatome aufweisen. Unter acyclischen Resten werden geradkettige oder verzweigte, ungesättigte und vorzugsweise gesättigte Alkylreste wie z. B. Methyl, Ethyl und Isobutenyl verstanden.

Die Ketone können auch durch einen oder mehrere Substituenten, welche die Kondensationsreaktion nicht beeinträchtigen, substituiert sein, wie z. B. durch Methyl-, Amino-, Hydroxy-, Alkoxy- oder Alkoxycarbonylgruppen mit vorzugsweise 1 bis 3 C-Atomen in den Alkylgruppen und/oder auch durch die in den Kondensationsprodukten enthaltenen Säuregruppen.

Bevorzugte Beispiele für geeignete Ketone sind Aceton und Diacetonalkohol. Weitere Beispiele sind Methyl-ethyl-keton, Methoxyaceton und Mesityloxid.

Der Rest R der Aldehyde R—CHO kann Wasserstoff oder ein aliphatischer Rest sein, in dem die Zahl der Kohlenstoffatome vorzugsweise 1 bis 3 beträgt und R z. B. Methyl, Ethyl oder Propyl ist. Die aliphatischen Reste können auch verzweigt oder ungesättigt sein und sind dann z. B. Vinylreste.

Die Aldehyde können auch durch einen oder mehrere Substituenten, welche die Kondensationsreaktion nicht beeinträchtigen, substituiert sein, wie z. B. durch Amino-, Hydroxy-, Alkoxy- oder Alkoxycarbonylgruppen mit vorzugsweise 1 bis 3 C-Atomen in den Alkylgruppen und/oder auch durch die in den Kondensationsprodukten enthaltenen Säuregruppen. Es können auch Aldehyde mit mehr als einer Aldehydgruppe, z. B. Di- oder Trialdehyde, eingesetzt werden, die infolge ihrer erhöhten Reaktivität in einigen Fällen besonders zweckmäßig sein können.

Es können auch, z. B. bei Formaldehyd oder Acetaldehyd, die polymeren Formen (z. B. Paraformaldehyd oder Paraldehyd) eingesetzt werden.

Beispiele für gesättigte aliphatische Aldehyde sind Formaldehyd (oder Paraformaldehyd), Acetaldehyd (oder Paraldehyd) ; für substituierte gesättigte aliphatische Aldehyde Methoxy-acetaldehyd, Acetaldol ; für ungesättigte aliphatische Aldehyde Acrolein, Crotonaldehyd ; für Dialdehyde Glyoxal, Glutardialdehyd. Besonders bevorzugt werden Formaldehyd und Glyoxal.

Als Säuregruppen enthalten die erfindungsgemäß verwendeten Kondensationsprodukte vorzugsweise Carboxy- und insbesondere Sulfogruppen, wobei diese Gruppen auch über N-alkylen-Brücken gebunden sein können, und dann z. B. Sulfoalkyloxygruppen sind. Eine Alkylgruppe in diesen Resten besitzt vorzugsweise 1 bis 2 Kohlenstoffatome und ist insbesondere Methyl oder Ethyl. Die erfindungsgemäß verwendeten Kondensationsprodukte können auch zwei oder mehrere verschiedene Säuregruppen enthalten. Bevorzugt werden Sulfite sowie organische Säuren mit mindestens einer Carboxygruppe.

Die Aldehyde und Ketone sind in reiner Form, aber auch in Form von Verbindungen mit dem die Säuregruppen einführenden Stoff, z. B. als Aldehydsulfitaddukt einsetzbar. Es können auch zwei oder mehrere verschiedene Aldehyde und/oder Ketone eingesetzt werden.

Die Herstellung der erfindungsgemäß verwendeten Kondensationsprodukte erfolgt dadurch, daß man Keton, Aldehyd und Säuregruppen einführende Verbindung im Molverhältnis 1 : 1 bis 18 : 0,25 bis 3,0 bei einem pH-Wert von 8 bis 14 und einer Temperatur zwischen 60 und 85 °C umsetzt.

Bei der Herstellung wird in der Regel Keton und Säuregruppen einführende Verbindung vorgelegt und dann der Aldehyd unter den oben angegebenen Temperaturbedingungen zugesetzt. Die Konzentration der Lösung ist prinzipiell ohne Bedeutung, jedoch ist bei höheren Konzentrationen aufgrund der exothermen Umsetzung für eine wirksame Kühlung zu sorgen, damit die angegebene obere Temperaturgrenze von 85 °C nicht überschritten wird. Normalerweise genügt es jedoch, die Kondensationstemperatur durch eine entsprechende Geschwindigkeit der Aldehydzugabe und gegebenenfalls der Aldehydkonzentration zu steuern.

Alternativ ist es auch möglich, Aldehyd und Säuregruppen einführende Verbindung vorzulegen und dann das Keton, bevorzugt Aceton oder Diacetonalkohol, zuzusetzen.

Ebenso ist es möglich, auch nur eine der drei Komponenten vorzulegen und die beiden anderen vorgemischt, beispielsweise als Addukt, oder getrennt zuzusetzen, insbesondere nur das Keton oder nur den Aldehyd vorzulegen und die beiden anderen Komponenten zuzusetzen.

Wie oben erwähnt, wird bei der Umsetzung ein pH-Wert von 8 bis 14 eingehalten, vorzugsweise ein Wert von 11 bis 13. Die pH-Wert-Einstellung kann z. B. durch Zugabe von Hydroxyden ein- oder zweiwertiger Kationen oder durch Vorlegen der Säure in Form einer Säuregruppen einführenden Verbindung, wie Alkalisulfit, erfolgen, welche in wäßriger Lösung unter alkalischer Reaktion hydrolysiert.

Die Umsetzung kann sowohl in homogener als auch in heterogener Phase durchgeführt werden. Als Reaktionsmedium wird in der Regel Wasser oder ein Gemisch mit Wasser verwendet, wobei der Anteil des Wassers vorzugsweise mindestens 50 Gew.-% beträgt. Als nichtwäßrige Lösungsmittelzusätze kommen polare organische Lösungsmittel in Betracht wie z. B. Alkohol oder Säureester.

Die Umsetzung kann sowohl im offenen Gefäß als auch im Autoklaven durchgeführt werden, wobei es zweckmäßig sein kann, in einer Inertgasatmosphäre, z. B. unter Stickstoff, zu arbeiten.

Unmittelbar nach Zugabe der letzten Reaktionskomponente kann eine thermische Nachbehandlung des Produkts (n) erfolgen, wobei beispielsweise Temperaturen zwischen 40 °C und 150 °C angewandt werden können. Diese Nachbehandlung ist unter Umständen zur Erzielung einer gleichmäßigen Produktqualität empfehlenswert.

Die Kondensationsprodukte können, wenn erwünscht, aus ihren nach der Umsetzung erhaltenen Lösungen oder Dispersionen, z. B. durch Einengen am Rotationsverdampfer oder durch Sprühtrocknung isoliert werden. Die erhaltenen Lösungen oder Dispersionen können aber auch als solche direkt verwendet werden.

Bei diesem Herstellungsverfahren werden hohe Feststoffkonzentrationen eingehalten, die bis zu 60 % betragen können. Derart hohe Feststoffkonzentrationen haben den Vorteil, daß eine anschließende Konzentrierung für den Versand nicht erforderlich oder weniger aufwendig ist und auch im Falle einer Trocknung des Produktes entsprechend weniger Lösungsmittel entfernt werden muß. Andererseits ist bei den höheren Konzentrationen die Einhaltung der notwendigen engen Temperaturgrenzen mit höherem Aufwand verbunden.

Durch die Erfindung wird es überraschenderweise möglich, in stark salzhaltigem Milieu dieselben Vorteile bei Zementationssystemen zu erzielen, die mit den bisher verwendeten Dispergiermitteln nur im salzfreien oder allenfalls schwach salzhaltigen Milieu erhalten wurden.

Als Salze in den Zementationssystemen kommen dabei anorganische oder organische Salze ein-, zwei- und dreiwertiger Kationen in Frage. Sie können zum Beispiel die Chloride, Carbonate, Nitrate oder Acetate der Alkali- und Erdalkalimetalle, des Ammoniums oder des Aluminiums sein. Die Salze können in reiner Form oder als Gemisch mehrerer Salze wie z. B. beim Meerwasser in den Zementationssystemen vorkommen.

Für die Dispergierwirkung der erfindungsgemäß verwendeten Kondensationsprodukte spielt es keine Rolle, ob die Salze in gelöster Form im Anmachwasser enthalten sind oder trocken, z. B. mit dem Bindemittel oder Zuschlag in das System gelangen.

Ebenso können die erfindungsgemäß verwendeten Kondensationsprodukte sowohl im Anmachwasser gelöst enthalten sein als auch in trockener Form dem Bindemittel oder Zuschlag beigemischt werden.

Als Bindemittel kommen alle zementgebundenen Systeme in Frage, beispielsweise Portland-, Hochofen-, Flugaschen-, Traß- oder Tonerdeschmelzzemente in den verschiedenen Typen bezüglich Festigkeitsklasse oder mit speziellen Eingenschaften, wie z. B. Sulfatbeständigkeit.

Die Erfindung ermöglicht es demnach, hydraulische Bindemittel in stark salzhaltiger Umgebung anzumachen und dabei trotzdem die erforderliche Menge an Anmachwasser drastisch zu verringern mit den bekannten Vorteilen hinsichtlich höherer Frühfestigkeit, Verkürzung der Durchhärtungszeit und Verbesserung der Festigkeit des ausgehärteten Produkts. Diesbezügliche Anwendungen umfassen zum Beispiel das Betonieren im Salzstock unter Verwendung von gesättigter Natriumchloridlösung als Anmachwasser zum Erzielen einer ausreichenden Haftfestigkeit des Betons mit dem Salzstein oder die Herstellung von Fließbeton mit hohen Dosierungen an Calciumchlorid als Beschleunigerzusatz.

Weiterhin ermöglicht die erfindungsgemäße Verwendung der Kondensationsprodukte z. B. die Herstellung sehr dünnflüssiger Tiefbohrzementschlämmen unter Verwendung von Meerwasser als Anmachwasser, was insbesondere auf Offshore-Ölbohrstellen große Vorteile bedingt. Ebenso möglich ist auch das Auffüllen von Bohrlöchern mit Natriumchlorid-gesättigten Zementschlämmen, welche bei der Zementation tonhaltiger Schichten notwendig sind.

Die folgenden Beispiele erläutern die Erfindung.

A. Herstellungsbeispiele

Erfindungsgemäß verwendete Kondensationsprodukte mit Dispergierwirkung in salzhaltigen Systemen erhält man beispielsweise nach den Herstellungsvorschriften A.1 bis A.4

Pulversubstanzen der dort beschriebenen Harzprodukte können aus den Lösungen durch gängige Trocknungsverfahren, wie z. B. Vakuumeindampfen oder Zerstäubungstrocknung, erhalten werden.

A.1.

In einem offenen Reaktionsgefäß mit Rührwerk, Temperaturanzeige und Rückflußkühler legt man nacheinander 6.500 Gew.-Teile Wasser, 788 Gew.-Teile Natriumsulfit sowie 1.450 Gew.-Teile Aceton vor und verrührt einige Minuten intensiv.

Anschließend erwärmt man den Ansatz bis zum Siedepunkt des Acetons und tropft insgesamt 3.750 Gew.-Teile 30 %ige Formaldehydlösung (Formalin) zu, wobei die Temperatur des Reaktionsgutes auf 75 °C ansteigen darf. Nach Beendigung der Aldehydzugabe hält man den Ansatz noch 1 Stunde im Temperaturbereich um 95 °C.

Die abkühlte Lösung des Kondensationsproduktes weist einen Feststoffgehalt von 19 % auf und reagiert stark alkalisch.

Das Produkt ist beispielsweise zur Dispergierung von Tiefbohrzementschlämmen mit hohem Natriumchlorid-Gehalt geeignet.

A.2.

Im Reaktionsgefäß von Beispiel A.1. werden 1.400 Gew.-Teile Wasser, 630 Gew.-Teile Natriumsulfit, 580 Gew.-Teile Aceton sowie 2.850 Gew.-Teile 30 %iger Formaldehydlösung unter sinngemäßer Anwendung der Herstellungsvorschrift von A.1. zur Umsetzung gebracht. Während der Formaldehydzugabe wird durch Kühlung des Reaktionsgutes dafür gesorgt, daß die Temperatur des Ansatzes 85 °C nicht übersteigt.

Die so erhaltene Harzlösung ist niedrigviskos und besitzt einen Feststoffgehalt von 32 %.

Der Wirkstoff der Harzlösung stellt ein ausgezeichnetes Dispergiermittel für salzhaltige Systeme dar und kann z. B. zur Herstellung von Beton mit gesättigter Kochsalzlösung als Anmachwasser verwendet werden.

A.3.

Nach der Herstellungsvorschrift von Beispiel A.1. werden 1.105 Gew.-Teile Wasser, 494 Gew.-Teile Natriumsulfit, 377 Gew.-Teile Aceton sowie 1.950 Gew.-Teile einer 30 %igen Formaldehydlösung zur Umsetzung gebracht.

Die erhaltene niedrigviskose Lösung des Kondensationsprodukts weist einen Feststoffgehalt von 28 % und einen pH-Wert von 13,6 auf.

Das Harz eignet sich beispielsweise zur Verflüssigung von Calciumchlorid-haltigen Zementmörteln.

A.4.

360 Gew.-Teile Wasser, 315 Gew.-Teile Natriumsulfit, 58 Gew.-Teile Aceton sowie 1.500 Gew.-Teile einer 30 %igen Formaldehydlösung setzt man nach der Vorschrift von Beispiel A.1. um, wobei die Temperatur des Ansatzes 85 °C nicht übersteigen gelassen wird und schließt die halbstündige thermische Nachbehandlung bei 95 °C in gleicher Weise an.

Man erhält eine Harzlösung mit 26 % Feststoffgehalt und alkalischem pH-Wert.

Das Kondensationsprodukt kann beispielsweise zur Dispergierung von Zementsuspensionen, welche mit Meerwasser als Anmachwasser angemischt wurden, eingesetzt werden.

B. Anwendungsbeispiele

Die folgenden Beispiele erläutern die Wirkung der erfindungsgemäß verwendeten Kondensationsprodukte bei der Dispergierung salzhaltiger Zementationssysteme.

Als Zementationssysteme werden Zementschlämmen, Mörtel oder Betone aus Portlandzementen verschiedener Festigkeitsklassen, aus Hochofenzement oder aus Tiefbohrzementen verschiedener Typen aufgefaßt. Zugefügte Salze sind Natrium-, Kalium-, Calciumchlorid, Calciumnitrat, Magnesiumsulfate, Meersalz sowie eine Mischung von Natrium- und Calciumchlorid.

Zur Veranschaulichung der Wirkung erfindungsgemäß verwendeter Kondensationsprodukte beinhalten die Beispiele einen Vergleich der speziellen Aceton-Formaldehyd-Harze mit derzeit bekannten und handelsüblichen Dispergiermitteltypen, welche aus Übersichtlichkeitsgründen in den Tabellen wie folgt bezeichnet wurden :

Produkt A ist sulfoniertes Melamin-Formaldehyd-Kondensationsprodukt
Produkt B ist Naphthalinsulfonsäure-Formaldehyd-Harz
Produkt C ist zuckerfreies, gereinigtes Ligninsulfonat
Produkt D ist Natriumgluconat

Für die Vergleichsversuche wurden nur qualitativ hochwertige Handelsprodukte von marktführenden Herstellern verwendet. Die geprüften Dispergiermittel wurden ausschließlich in Pulverform eingesetzt, um unerwünschte Verdünnungseffekte bei der Zugabe von Lösungen zu den salzhaltigen Anmachwassern zu vermeiden.

Die Versuchsergebnisse stellen die jeweiligen Schlämmenviskositäten oder Ausbreitmaße der Zementationssysteme als Relativwerte dar, welche auf den Nullversuch ohne Zusatzmittel, der gleich 100 % gesetzt wurde, bezogen sind.

Diese Form der Darstellung ermöglicht bei Produktvergleichen eine bessere Beurteilung der Wirkung des einzelnen Zusatzmittels und wurde daher der Angabe von Absolutwerten vorgezogen.

Bei der Herstellung von Zementationssystemen mit hohem Salzgehalt ist häufig starkes Schäumen während des Anmischprozesses beobachtet worden (vgl. D.K. Smith, « Cementing », S. 26/27, New York 1976). Da Lufporeneinführung die Viskositäts- und Ausbreitmaßbestimmungen für die einzelnen Zusatzmittel verfälscht, wurden Zementationssysteme mit Verschäumungstendenz durch Zusatz geringer Mengen an Tri-n-butylphosphat entschäumt.

5

B.1. Dispergierung von Tiefbohrzementschlämmen mit Natriumchlorid-Zusatz

Das Beispiel beschreibt die Wirkung der erfindungsgemäß verwendeten Kondensationsprodukte aus den Herstellungsbeispielen A.1. bis A.4. an einem Tiefbohrzementationssystem bei erhöhter Temperatur. Zu diesem Zweck wurden nach der vom American Petroleum Institute (API) in Specification 10, « API Specification for Materials and Testing for Well Cements », Ausgabe Januar 1982, festgelegten Vorschrift Zementschlämmen aus einem Tiefbohrzement der API-Klasse G mit einem Wasser-Zement-Faktor von 0,44 hergestellt, wobei dem Zement vor dem Anmischen der Schlämme 9,72 % seines Gewichts an Natriumchlorid homogen eingemischt wurden. Der Salzgehalt von 9,72 %, bezogen auf das Zementgewicht, entspricht der Verwendung einer 18 %igen Kochsalzlösung als Anmachwasser und wird in der Praxis der Tiefbohrzementation z. B. zum Abdichten von Bohrlöchern gegen salzhaltige Lagerstätten eingesetzt. Die zu prüfenden Dispergiermittel wurden mit 1,0 % Dosierung, bezogen auf das Zementgewicht, ebenso wie das Salz vor dem Anmischen als Pulver homogen in den Zement eingebracht. Derartige Tiefbohrzementschlämmen neigen aufgrund des hohen Salzgehalts zum Schäumen und werden mit jeweils 0,5 g Tri-n-butylphosphat als Entschäumer versetzt.

Nach dem Anmischen rührt man die Zementschlämmen entsprechend der API-Norm 20 Minuten im atmosphärischen Konsistometer bei 88 °C und bestimmt anschließend die Schlämmenviskositäten mit einem Fann-Viskosimeter (Modell 35 SA, Rotor-Bob R1B1).

Tabelle I beschreibt die bei 600 UpM erhaltenen relativen Schlämmenviskositäten, wobei die Viskosität der zusatzmittelfreien Schlämme (Nullversuch) gleich 100 % gesetzt wurde.

Tabelle I

Dispergierwirkung erfindungsgemäß verwendeter Kondensationsprodukte an einem Natriumchloridhaltigen Tiefbohrzementationssystem bei 88 °C

| Produkt | Relative Schlämmenviskosität (%), gemessen am Fann-Viskosimeter bei 600 UpM |
|---|---|
| Nullversuch | 100 |
| A.1. | 85 |
| A.2. | 79 |
| A.3. | 83 |
| A.4. | 73 |
| Produkt B | 295 |

Einzelheiten zur Herstellung und Zusammensetzung der Tiefbohrzementschlämmen sind im Beispiel B.1. beschrieben.

Die Meßergebnisse zeigen, daß die nach den Herstellungsbeispielen A.1. bis A.4. gewonnenen erfindungsgemäß verwendeten Kondensationsprodukte in salzhaltigen Tiefbohrzementationssystemen gute Dispergierwirkung besitzen und deshalb als Viskositätserniedriger für diese Zementschlämmen verwendet werden können. Ein in der Branche derzeit eingesetztes, typisches Naphthalin-Formaldehyd-Sulfonsäureharz (Produkt B) hingegen versagt hinsichtlich der Dispergierung des Systems.

B.2. Verflüssigung von Beton mit Natriumchlorid-Zusatz

Die Herstellung von Beton mit gesättigter Natriumchlorid-Lösung als Anmachwasser ist eine Problemstellung aus dem Bergbau, wobei die Verflüssigung des Betons unter Beibehaltung des Wasser-Zement-Wertes zur besseren Einbringung sehr wünschenswert wäre. Bei dieser Problemstellung, welche grundsätzlich durch Zugabe von geeigneten Dispergiermitteln gelöst werden könnte, versagen die bisher handelsüblichen Verflüssigerzusätze.

Durch Zusatz eines Kondensationsproduktes von Beispiel A.2. ist jedoch die Verflüssigung von Beton mit hohem Salzgehalt möglich. Die Herstellung des Natriumchlorid-haltigen Betons geschieht folgendermaßen :

In einem 30 l-Zwangsmischer werden 30 kg Zuschläge der Sieblinie $B_{16}$ mit 4,7 kg Portlandzement der Festigkeitsklasse Z 35 F nach DIN 1045 vorgelegt, mit 0,5 l einer gesättigten Kochsalz-Lösung befeuchtet und 1 Minute angemischt. Dann gibt man bei laufender Mischertrommel die restliche Natriumchlorid-Lösung zu und mischt weitere 2 Minuten. Die Gesamtmenge an NaCl-Lösung wird so gewählt, daß der erhaltene Beton einen Wasser-Zement-Faktor von 0,65 aufweist. Zur Vermeidung übermäßiger Luftporeneinführung beim Anmischen des Salzbetons sind dem Anmachwasser jeweils 2 ml Tri-n-butylphosphat als Entschäumer zugesetzt. Die pulverförmigen Zusatzmittel setzt man in einer Dosierung von 0,5 %, bezogen auf das Zementgewicht, ein und löst vor Beginn des Anmischens vollständig im Anmachwasser auf.

Von den hergestellten Betonen wurden im Anschluß an den Anmischprozeß die Ausbreitmaße nach DIN 1048 bestimmt und hieraus die Dispergierwirkung der Zusatzmittel beurteilt.

Tabelle II gibt die Versuchsergebnisse wieder. Sie zeigen, daß Verflüssiger auf Melamin- oder Naphthalin-Harz-Basis keine Dispergierwirkung unter diesen Bedingungen mehr besitzen. Das erfindungsgemäß verwendete Kondensationsprodukt von Beispiel A.2. hingegen ermöglicht eine beträchtliche Verbesserung der Verarbeitbarkeit des Salzbetons.

B.3. Dispergierung eines Calciumchlorid-haltigen Zementationssystems

Bei der Verwendung von Calciumchlorid als Erstarrungsbeschleuniger für zementgebundene Systeme ist häufig der Einsatz von Verflüssigern erwünscht. Die bekannten Superverflüssiger auf Melamin- oder Naphthalin-Harz-Basis verlieren jedoch ihre Dispergierwirkung in Gegenwart hoher Konzentrationen an Calciumionen ebenso wie die Ligninsulfonat-Harze rasch. Hydroxycarbonsäuren, wie z. B. Natriumgluconat, sind ebenfalls unbrauchbar, da sie bei den für eine befriedigende Verflüssigung anzuwendenden hohen Dosierungen die Festigkeitsentwicklung des zementgebundenen Systems viel zu stark verzögern und damit die Wirkung des Beschleunigerzusatzes Calciumchlorid aufheben.

Die folgenden Mörtelversuche zeigen, wie das Problem der Dispergierung Calciumchlorid-haltiger Zementationssysteme mit Hilfe der erfindungsgemäß verwendeten Kondensationsprodukte ohne Nachteile in der Festigkeitsentwicklung gelöst werden kann.

Unter Anlehnung an die deutsche Norm DIN 1164 bereitet man einen Mörtel aus 450 g Portlandzement der Festigkeitsklasse Z 45 F, 1.350 g Normensand sowie 235 g einer 5 %igen Lösung von Calciumchlorid-Hexahydrat als Anmachwasser, wobei für den Anmischprozeß das Mischprogramm RILEM-CEM* gewählt wird. Vor Beginn des Anmischens werden die zu prüfenden pulverförmigen Dispergiermittel vollständig im Anmachwasser gelöst und außerdem 0,5 g Tri-n-butylphosphat als Entschäumer zugefügt.

Von den so hergestellten Mörteln bestimmt man das Ausbreitmaß nach DIN 1164, Ausgabe 1958, und an den nach der Norm bereiteten Mörtelprismen, die 1- bzw. 3-Tages-Biegezug- und Druckfestigkeiten. Bei der Lagerung der Prüfkörper für die 3-Tage-Festigkeiten wurde abweichend von DIN 1164 im Anschluß an die Entschalung nach 1 Tag keine Unterwasserlagerung, sondern eine Luftlagerung der Mörtelprismen bei 20 °C und 65 % relativer Luftfeuchtigkeit vorgenommen.

* nach Vorschrift des CEM-Bureaus (Paris)

Tabelle II

Ausbreitmaß Natriumchlorid-haltiger Betone mit Zusatz verschiedener Dispergiermittel

| Dispergiermittel | Relatives Beton-Ausbreitmaß (%) nach DIN 1048 |
|---|---|
| Nullversuch | 100 |
| Produkt A | 96 |
| Produkt B | 91 |
| A.2. | 138 |

Die Herstellung des Salzbetons erfolgte mit 26 %iger NaCl-Lösung als Anmachwasser.

7

EP 0 146 078 B1

Weitere Einzelheiten der Betonrezeptur und -prüfung sind im Beispiel B.2. beschrieben.

Die Ergebnisse der Mörtelversuche sind in den Tabellen III und IV dargestellt. Hieraus ist ersichtlich, daß keines der derzeit handelsüblichen Dispergiermittel auch bei Anwendung sehr hoher Dosierungen eine zufriedenstellende Verflüssigung der Calciumchlorid-haltigen Zementmörtel ermöglicht. Mit einem nach Beispiel A.3. hergestellten Aceton-Formaldehyd-Sufit-Harz sind jedoch Ausbreitmaßsteigerungen von 30 bzw. 43 % zu erzielen. Tabelle III illustriert zudem, daß die Festigkeitsentwicklung des Mörtels mit Zusatz an erfindungsgemäßem Produkt nach A.3. im Vergleich zum Nullversuch nicht nachteilig beeinflußt wird, während z. B. Ligninsulfonat (Produkt C) bei gleicher Dosierung eine Verzögerung der Hydratation bedingt. Natriumgluconat ergibt als einziges der untersuchten handelsüblichen Produkte bei Zusätzen ab 0,75 % annähernd brauchbare Verflüssigung des Calciumchlorid-haltigen Systems. Bei diesen hohen Dosierungen ist jedoch der verzögernde Effekt des Hydroxycarbonsäuresalzes so stark, daß selbst nach 3 Tagen keine Festigkeitsbestimmung an den Mörtelprismen möglich ist (vgl. Tabelle IV). Niedrigere Dosierungen, wie z. B. 0,2 %, vermindern zwar die Verzögerungswirkung des Natriumgluconats, doch wird bei diesen Zusätzen keine gute Dispergierung des Systems mehr erzielt.

Tabelle III

Dispergierung von Calciumchlorid-haltigem Zementmörtel

| Dispergiermittel | Zusatz* (%) | Mörtelausbreitmaß (%) nach DIN 1164 |
|---|---|---|
| Nullversuch | - | 100 |
| Produkt D | 0,1 | 108 |
|  | 0,2 | 116 |
| Produkt A | 0,75 | 104 |
| Produkt B | 0,75 | 108 |
| Produkt C | 0,75 | 106 |
| Produkt D | 0,75 | 124 |
| A.3. | 0,75 | 130 |
| Produkt A | 1,00 | 107 |
| Produkt B | 1,00 | 112 |
| Produkt C | 1,00 | 108 |
| Produkt D | 1,00 | 125 |
| A.3. | 1,00 | 143 |

* Zusätze an Dispergiermittel sind Gewichtsprozent, bezogen auf den Zementgehalt der Mörtelmischung.

(Siehe Tabelle IV Seite 9 f.)

8

## Tabelle IV

### Festigkeitsentwicklung von Calciumchlorid-haltigem Zementmörtel

| Dispergiermittel | Zusatz (%) bezogen auf Zementgewicht | Festigkeitswerte (%) | | | |
|---|---|---|---|---|---|
| | | nach 1 Tag | | nach 3 Tagen | |
| | | Biegezug-festigkeit | Druckfestigkeit | Biegezug-festigkeit | Druckfestigkeit |
| Nullversuch | – | 100 | 100 | 100 | 100 |
| A.3. | 0,75 | 116 | 101 | 141 | 100 |
| Produkt C | 0,75 | 93 | 82 | 90 | 97 |
| Produkt D | 0,20 | 80 | 74 | 76 | 94 |
| Produkt D | 0,75 | 5 | 5 | 5 | 5 |

EP 0 146 078 B1

B.4. Verflüssigung von Zementmörtel bei Verwendung von Meerwasser als Anmachwasser

Meerwasser ist ein Beispiel für ein Anmachwasser, welches bei einem Gesamtsalzgehalt von ca. 3,5 % ein Gemisch verschiedener Salze der Alkali- und Erdalkalimetalle enthält. So setzt sich z. B. synthetisches Meerwasser nach DIN 50 900, Ausgabe November 1960, zusammen aus 985 g destillierten Wassers, 28 g Natriumchlorid, 7 g Magnesiumsulfat-Heptahydrat, 5 g Magnesiumchlorid-hexahydrat, 2,4 g Calciumchlorid-hexahydrat und 0,2 g Natriumhydrogencarbonat.

Das folgende Beispiel zeigt, daß erfindungsgemäß verwendete Kondensationsprodukte zur Verflüssigung von Zementmörtel, welcher mit Meerwasser als Anmachwasser hergestellt wurde, ebenfalls geeignet sind.

Dazu bereitet man nach der im Beispiel B.3. geschilderten Weise einen Zementmörtel aus Portlandzement der Festigkeitsklasse Z 35 F sowie synthetischem Meerwasser nach DIN 50 900, wobei der Wasser-Zement-Faktor 0,50 betragen soll. Die Zusatzmittel werden vor dem Anmischen im Meerwasser vollständig gelöst und außerdem 0,5 g Tri-n-butylphosphat als Entschäumer zugesetzt. Von den Mörteln bestimmt man am Ausbreittisch nach DIN 1164, Ausgabe 1958, das Ausbreitmaß.

Tabelle V illustriert, daß mit Zusatz des speziellen Kondensationsproduktes von A.2. die beste Verflüssigungswirkung an den Zementmörteln erzielt wird.

Tabelle V

Mörtelausbreitmaße bei Verwendung von Meerwasser nach DIN 50 900 als Anmachwasser

| Dispergiermittel | Zusatz (%) | Mörtelausbreitmaß nach DIN 1164 (%) |
|---|---|---|
| Nullversuch | - | 100 |
| A.2. | 1,2 | 142 |
| Produkt A | 1,2 | 127 |
| Produkt B | 1,2 | 126 |
| Produkt C | 1,2 | 119 |

Einzelheiten zur Herstellung und Ausprüfung der Zementmörtel sind Beispiel B.4. zu entnehmen.

B.5. Dispergierung von Meerwasser-haltigen Tiefbohrzementationssystemen

Die Verwendung von Meerwasser als Anmachwasser für Zementschlämmen ist in der Tiefbohrtechnik häufig notwendig, da z. B. auf Offshore-Bohrstellen der Antransport von Süßwasser einen unvertretbar hohen Kostenaufwand darstellt. Aus diesem Grund besteht in der Tiefbohrzementation ein Bedarf an Dispergiermitteln, deren Wirkung durch die Anwesenheit von Meerwasser in der Schlämme nicht beeinträchtigt wird.

Das folgende Beispiel beschreibt den Einsatz erfindungsgemäßer Aceton-Formaldehyd-Harze nach A.3. zur Verflüssigung derartiger Zementationssysteme.

Für die Herstellung der Tiefbohrzementschlämmen wird Pozmix A, ein sulfatbeständiger Leichtzement für die Bohrlochzementierung mit 40 % Flugaschenanteil verwendet. Nach den im Beispiel B.1. zitierten Vorschriften des American Petroleum Institute mischt man aus Pozmix A-Zement und synthetischem Meerwasser nach DIN 50 900 Zementschlämmen mit einem Wasser-Zement-Faktor von 0,48 an, rührt 20 Minuten bei 38 °C im atmosphärischen Konsistometer und mißt anschließend am Fann-Viskosimeter bei 600 UpM die jeweiligen Schlämmenviskositäten für die Prüftemperatur von 38 °C. Wie in der Tiefbohrzementation üblich, werden auch hier die zu prüfenden Dispergiermittel trocken in den Zement eingemischt und den Schlämmen jeweils 0,5 g Tri-n-butylphosphat als Anti-Schaummittel zugesetzt.

Das in Tabelle VI zusammengefaßte Versuchsergebnis verdeutlich die Überlegenheit des erfindungsgemäß verwendeten Dispergiermittels nach A.3. an Meerwasser-haltigen Zementationssystemen im Vergleich zu handelsüblichen Verflüssigerzusätzen auf Melamin-, Naphthalin- oder Ligninsulfonatharz-Basis.

Tabelle VI

Dispergierung Meerwasser-haltiger Tiefbohrzementationssysteme

| Dispergiermittel | Zusatz (%) | Relative Schlämmenviskosität (%); gemessen mit dem Fann-Viskometer bei 600 UpM |
|---|---|---|
| Nullversuch | - | 100 |
| A.3. | 0,70 | 52 |
| Produkt A | 0,70 | 94 |
| Produkt B | 0,70 | 92 |
| Produkt C | 0,70 | 157 |

Die Prüftemperatur bei der Messung der Schlämmenviskositäten betrug 38 °C.
Die Dosierungsangaben der Dispergiermittel beziehen sich auf das Zementgewicht der Schlämme.

**Patentansprüche**

1. Verwendung eines Kondensationsproduktes aus Keton, Aldehyd und Säuregruppen einführender Verbindung im Molverhältnis von 1 : 1 bis 18 : 0,25 bis 3,0, das durch Umsetzung dieser Komponenten bei einer Temperatur zwischen 60 und 85 °C hergestellt worden ist, für salzhaltige Zementationssysteme, die mehr als 2 % von Salzen ein- oder mehrwertiger Kationen enthalten.

2. Verwendung nach Anspruch 1, dadurch gekennzeichnet, daß die Ketonkomponente aus einem acyclischen Keton besteht, dessen Kohlenwasserstoffreste 1 bis 3 Kohlenstoffatome enthalten.

3. Verwendung nach Anspruch 1 oder 2, dadurch gekennzeichnet, daß die Aldehydkomponente aus einem acyclischen Aldehyd mit der Formel R—CHO mit R=H oder Kohlenwasserstoffresten mit 1 bis 3 Kohlenstoffatomen und/oder Dialdehyden der Formel OHC—$(CH_2)_n$—CHO mit n=0 bis 2 besteht.

4. Verwendung nach einem der Ansprüche 1 bis 3, dadurch gekennzeichnet, daß die Säuregruppen einführende Verbindung ein Alkali- und/oder Erdalkalisalz der schwefligen Säure, der 2-Aminoethansulfonsäure und/oder der Aminoessigsäure ist.

5. Verwendung nach einem der Ansprüche 1 bis 3, dadurch gekennzeichnet, daß die Säuregruppen einführende Verbindung das Sulfit-Additionsprodukt eines Ketons und/oder Aldehyds ist.

6. Verwendung nach einem der vorhergehenden Ansprüche, dadurch gekennzeichnet, daß das Kondensationsprodukt durch Umsetzung von Keton, Aldehyd und Säuregruppen einführender Verbindung bei einem pH-Wert von 8 bis 14 erhalten wurde.

7. Verwendung nach Anspruch 6, dadurch gekennzeichnet, daß das Kondensationsprodukt durch Umsetzung in Wasser oder einem Gemisch von Wasser und polarem organischen Lösungsmittel erhalten wurde.

8. Verwendung nach einem der vorhergehenden Ansprüche für salzhaltige Zementationssysteme, die 3 % bis zu gesättigten Lösungen von Salzen ein- und/oder mehrwertiger Kationen enthalten.

**Claims**

1. Use of a dispersion agent of ketone, aldehyde and acid group-introducing compound in the mole ratio of 1 : 1 to 18 : 0.25 to 3.0 which has been produced by reaction of these components at a temperature between 60 and 85 °C for salt-containing cementation systems which contain more than 2 % of salts of mono- or polyvalent cations.

2. Use according to claim 1, characterised in that the ketone component consists of an acyclic ketone, the hydrocarbon radicals of which contain 1 to 3 carbon atoms.

3. Use according to claim 1 or 2, characterised in that the aldehyde component consists of an acyclic aldehyde with the formula R—CHO with R=H atom or hydrocarbon radicals with 1 to 3 carbon atoms and/or dialdehydes of the formula OHC—$(CH_2)_n$—CHO with n=0 to 2.

4. Use according to one of claims 1 to 3, characterised in that the acid group-introducing compound is an alkali and/or alkaline earth metal salt of sulphurous acid, 2-aminoethanesulphonic acid and/or aminoacetic acid.

5. Use according to one of claims 1 to 3, characterised in that the acid group-introducing compound is the sulphite addition product of a ketone and/or aldehyde.

6. Use according to one of the preceding claims, characterised in that the condensation product has been obtained by reaction of ketone, aldehyde and acid group-introducing compound at a pH value of 8 to 14.

7. Use according to claim 6, characterised in that the condensation has been obtained by reaction in water or a mixture of water and polar organic solvent.

8. Use according to one of the preceding claims for salt-containing cementation systems which contain from 3 % up to saturated solutions of salts of mono- and/or polyvalent cations.

**Revendications**

1. Utilisation d'un produit de condensation à partir d'une cétone, d'un aldéhyde et d'un composé introduisant des groupes acides dans un rapport molaire de 1 : 1 à 18 : 0,25 à 3,0, qui a été préparé par réaction de ces constituants à une température entre 60 à 85 °C, pour des systèmes de cimentation salins contenant plus de 2 % de sels de cations mono- ou plurivalents.

2. Utilisation selon la revendication 1, caractérisée en ce que le composant cétonique consiste en une cétone acyclique dont les restes hydrocarbonés contiennent 1 à 3 atomes de carbone.

3. Utilisation selon la revendication 1 ou 2, caractérisée en ce que le composant aldéhydique consiste en un aldéhyde acyclique de formule R—CHO avec R=H ou des restes hydrocarbonés avec 1 à 3 atomes de carbone et/ou en des dialdéhydes de formule OHC—$(CH_2)_n$—CHO avec n=0 à 2.

4. Utilisation selon l'une des revendications 1 à 3, caractérisée en ce que le composé introduisant des groupes acides est un sel alcalin et/ou alcalino-terreux de l'acide sulfureux, de l'acide 2-aminoéthanesulfonique et/ou de l'acide aminoacétique.

5. Utilisation selon l'une des revendications 1 à 3, caractérisée en ce que le composé introduisant des groupes acides est le produit d'addition sulfitique d'une cétone et/ou d'un aldéhyde.

6. Utilisation selon l'une des revendications précédentes, caractérisée en ce que le produit de condensation a été obtenu par réaction d'une cétone, d'un aldéhyde et d'un composé introduisant des groupes acides à une valeur de pH de 8 à 14.

7. Utilisation selon la revendication 6, caractérisée en ce que le produit de condensation a été obtenu par réaction dans de l'eau ou dans un mélange d'eau et de solvants organiques polaires.

8. Utilisation selon l'une des revendications précédentes pour des systèmes de cimentations salins qui contiennent 3 % jusqu'à des solutions saturées de sels de cations mono- et/ou plurivalents.